# EUROPEAN PATENT SPECIFICATION

(11) **EP 2 530 364 B1**
(45) Date of publication and mention of the grant of the patent: **23.07.2014**
(21) Application number: 11736845.6
(22) Date of filing: 13.01.2011
(51) Int. Cl.: F16J 15/32, B60T 8/34, F04B 53/00, F04C 15/00, F16J 15/18

(54) **SEALING DEVICE, AND PUMP DEVICE USING SAME**
DICHTUNGSVORRICHTUNG UND PUMPVORRICHTUNG DAMIT
DISPOSITIF D'ÉTANCHÉITÉ, ET DISPOSITIF DE TYPE POMPE UTILISANT CELUI-CI

(30) Priority: 26.01.2010 JP 2010014342
(43) Date of publication of application: 05.12.2012
(73) Proprietor: NOK Corporation, Minato-ku Tokyo 105-8585 (JP); Advics Co., Ltd., Kariga-City Aichi 448-8688 (JP)
(72) Inventor: TADANO, Hikaru, Kitaibaraki-shi Ibaraki 319-1535 (JP); MONMA, Hiroaki, Kitaibaraki-shi Ibaraki 319-1535 (JP); YOSHIOKA, Nobuhiko, Kariya-city Aichi 448-8688 (JP); YAMAGUCHI, Takahiro, Kariya-city Aichi 448-8688 (JP)
(74) Representative: TBK
(86) International application number: PCT/JP2011/050387
(87) International publication number: WO 2011/093130

(56) References cited:
- JP-A- 2000 355 274
- JP-U- H0 218 971
- JP-U- 56 004 061
- JP-U- 61 001 776
- US-A- 5 328 178
- US-B1- 6 290 235

## Description

**The present invention relates to a sealing device according to the preamble of claim 1, and a pump device using the sealing device. The sealing**

device of the present invention is used, for example, as a shaft seal for a pump device in a vehicle such as a motor vehicle. Further, the sealing device of the present invention is used as a sealing device for rotating and reciprocating in which an accumulated pressure relief function is required, in addition to this.

### Description of the Conventional Art

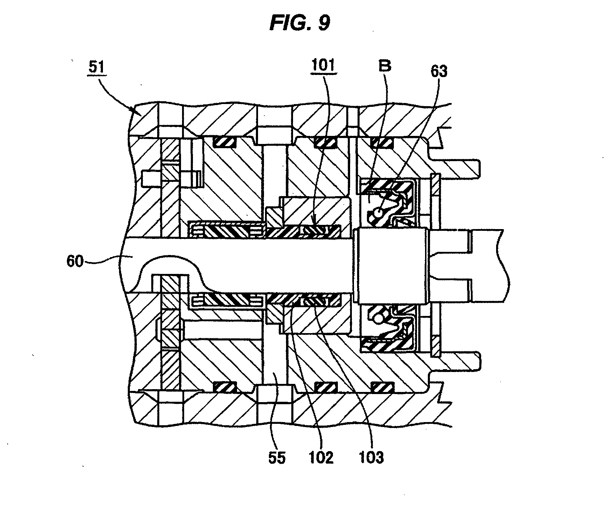

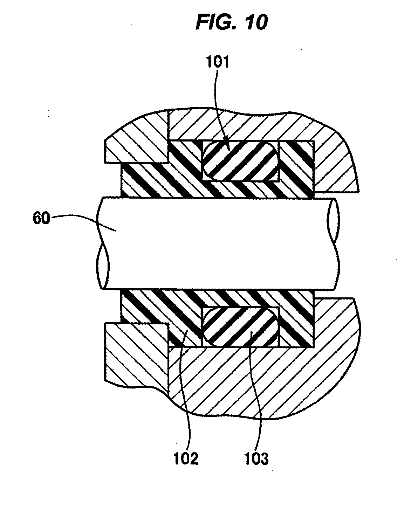

As a shaft seal used in a rotary pump device 51 shown in Fig. 9, a sealing device 101 shown in Fig. 10 has been conventionally known. The sealing device 101 is constructed by a combination of a seal ring 102 and a back ring 103, and an O-ring which is a compression type squeeze packing is employed as the back ring 103.

However, in this conventional sealing device 101, if a frequency in use of the pump device 51 is increased, a fluid is pressure fed to an intermediate chamber B (a space between the sealing device 101 and a seal member (an atmospheric air side oil seal) 63 which is arranged in an atmospheric air side thereof) from an intake side pipe line 55 on the basis of an increase of a membrane pressure going with a rotational sliding motion of the seal ring 102 and a shaft 60, and there is a possibility that a pressure accumulating phenomenon is generated in the intermediate chamber B. In the case that this can not be dissolved, there is a risk that a sealing performance of the seal member 63 in the atmospheric air side is lowered, so that a frequency in use of the pump device 51 is limited.

On the other hand, in recent years, in a vehicular brake apparatus, there is demanded a function (an ESC function) of improving a safety and a convenience of a motor vehicle by compositely controlling an ABS, however, since there is a risk of the pressure accumulation as mentioned above in the pump device 51 using the conventional sealing device 101, it is hard to increase a frequency in operation, and a function of releasing the pressure accumulation with respect to the sealing device 101 is going to be required.

The accumulated pressure relief function can solve a problem by applying this to any one of the sealing device 101 or the atmospheric air side seal member 63, however, since an application of the accumulated pressure relief function to the atmospheric air side seal member 63 comes to an oil leakage to an external portion, it is demanded to apply the accumulated pressure relief function to the sealing device 101 for preventing an environment pollution.

### Prior Art Documents

**Patent Document 1:** JP 3654043 B2 **(****Fig. 6 and Fig. 7****)**
**Patent Document 2:** JP 2007-278086 A

US 6 290 235 B1 shows a generic sealing device according to the preamble of claim 1. This sealing device is installed between a cylinder and a shaft which is inserted to a shaft hole of the cylinder so as to inhibit a sealed fluid from leaking from one space in an axial direction to another space in the axial direction, The sealing device comprises a seal ring which is arranged in an inner periphery of the shaft hole of said cylinder so as to slidably come into close contact with a peripheral surface of said shaft; and a back ring which is arranged in an outer periphery of said seal ring so as to seal between said seal ring and the cylinder, wherein said back ring is constructed by a lip packing which is provided with an inner lip and an outer lip in one end portion in one side of an axial direction of an annular base portion, and wherein said outer lip has a function of sealing by being in close contact with said cylinder for sealing said sealed fluid and is provided with a directionality with respect to the sealing action such that said outer lip is capable of releasing an accumulated pressure by being pushed by a pressure so as to be spaced from said cylinder in a state in which said accumulated pressure is generated in the another space and applied on a back surface side of said outer lip in said axial direction.

JP H02 18971 U discloses another sealing device according to the prior art.

### SUMMARY OF THE INVENTION

It is an object of the present invention to further develop a sealing device according to the preamble of claim 1 such that a sealing function of the sealing device is improved and an accumulated pressure relief function is provided.

The object of the present invention is achieved by a sealing device having the features of claim 1.

Further advantageous developments according to the present invention are defined in the dependent claims.

A pump device using the sealing device according to the present invention in a sealing mechanism is defined in claim 7.

Preferably, in accordance with the present invention, there is provided a sealing device, wherein the flow path is constructed by a groove-shaped flow path.

Preferably, in accordance with the present invention, there is **provided a sealing device, wherein**
an outer lip base end portion and an annular base portion do not come into close contact with the cylinder in a state in which an annular protrusion and an outer lip leading end portion in the lip packing come into close contact with the cylinder, thereby setting such that the diametrical direction compression margin of the groove bottom portion between both the lips is not provided.

**Preferably, in accordance with the present invention, there is** provided a sealing device as recited in any one of claim 1 to claim 3 mentioned above, wherein an inner peripheral surface of the annular base portion and an inner peripheral surface of the inner lip in the lip packing are formed as a cylindrical surface shape which is straight in an axial direction over a whole length in the axial direction.

**Preferably, in accordance with the present invention, there is provided a sealing device wherein an annular installation groove for installing the sealing device is** provided in an inner peripheral surface of the shaft hole of the cylinder, and a flow path for introducing the accumulated pressure to the outer lip is provided in another end surface portion in the axial direction of the seal ring and/or another side surface portion in the axial direction of the installation groove.

**Preferably, in accordance with the present invention, there is provided a sealing device, wherein the sealing device is used as a shaft seal of a pump device for controlling a brake in a vehicle such as a motor vehicle or the like.**

The sealing device of the present invention having the structure mentioned above is constructed by a combination of the seal ring and the back ring, and the latter back ring among them is constructed by the lip packing in place of the squeeze packing as is different from the conventional one, that is, is constructed by the lip packing which is integrally provided with the inner lip and the outer lip in one end portion in the axial direction of the annular base portion. The outer lip is structured such as to come into close contact with the cylinder so as to seal the sealed fluid, however, is provided with a directionality with respect to the sealing action, is pushed by the pressure so as to be spaced from the cylinder if the accumulated pressure is applied from the back surface direction, and achieves the function of releasing the accumulated pressure at this time. Accordingly, the outer lip operates as one kind of pressure releasing valve with respect to the pressure accumulating phenomenon which is generated in the back surface side thereof, and relieves the accumulated pressure on the basis of the valve opening action. The valve closing time corresponds to a normal sealing action time, and the valve opening time corresponds to an accumulated pressure relief time.

In this case, if the conventional squeeze packing is changed to the lip packing as the back ring, there is a risk that a force by which the back ring presses the seal ring against the shaft (a pressing load) is lowered. Accordingly, the present invention is structured such that the annular protrusion for setting the diametrical direction compression margin is integrally provided in the outer peripheral surface of the annular base portion in the back ring (the lip packing), and the pressing load is secured by the diametrical direction compression margin by the annular protrusion. It is sufficient that the annular protrusion is provided at least a part in the axial direction of the outer peripheral surface of the annular base portion, and it is possible to adjust a magnitude of the pressing load in correspondence to a magnitude (a height in a diametrical direction, a width in an axial direction or the like) thereof.

Further, in the present invention, the following devices are applied, in order to smoothly carry out the accumulated pressure relief action by the outer lip.
(1) If the annular protrusion is integrally provided in the outer peripheral surface of the annular base portion in the lip packing as mentioned above, there is a risk that the annular protrusion comes to a dam (a seal dam), and the accumulated pressure in the lip packing back surface side does not run into the outer lip. Accordingly, the present invention is structured such that the flow path is provided in the annular protrusion, and the accumulated pressure runs into the outer lip through the flow path. The flow path may be formed as a groove shape which extends on the annular protrusion in the axial direction, or may be formed as a hole shape which extends in the axial direction while passing through the annular protrusion.
(2) Since the lip packing mentioned above is formed such a shape that the inner lip and the outer lip are integrally formed in one end portion in the axial direction of the annular base portion, it is often called as a U packing on the basis of its cross sectional shape, and the U packing is a known sealing element. However, the conventional U packing is generally structured such that the diametrical direction compression margin is set in a groove bottom portion between both the lips. If the compression margin is set in the groove bottom portion as mentioned above, an elastic deformation of the outer lip is controlled by the compression margin, and there is a risk that the outer lip can not smoothly operate so as to open and close. Accordingly, in the present invention, the lip base end portion and the annular base portion do not come into close contact with the cylinder in the state in which the annular protrusion and the outer lip leading end portion in the lip packing come into close contact with the cylinder, thereby setting such that the diametrical direction compression margin of the groove bottom portion between both the lips is not provided. In accordance with this, since the outer lip is not constrained by the compression margin, the outer lip easily operates so as to open and close. In this case, since it is sufficient that the lip base end portion and the annular base portion do not generate the diametrical direction compression margin in the groove bottom portion, they may be structured such as to come into contact with the cylinder in a state in which a contact surface pressure is zero.
(3) The conventional U packing is generally formed as such a shape that the inner lip and the outer lip are open as a trumpet shape in a cross sectional shape thereof, however, since the annular base portion is lifted up by the inner lip in a state in which the U packing is installed to the outer periphery of the seal ring, in the shape mentioned above, a gap in a diametrical direction is generated between the annular base portion and the seal ring. Therefore, if the accumulated pressure is increased, the U packing first of all elastically deforms in such a manner as to do away with this gap, and a releasing motion of the outer lip is delayed at this degree, so that it becomes hard to control a timing for releasing. Accordingly, in the present invention, since the inner peripheral surface of the annular base portion and the inner peripheral surface of the inner lip in the lip packing are formed as the cylindrical surface shape which is straight in the axial direction over a whole length in the axial direction from the beginning, and the gap in the diametrical direction is not accordingly generated from the beginning, it becomes easy to control the timing for releasing. Further, in accordance with the shape mentioned above, there is such an advantage that the diametrical direction pressing load by the annular protrusion mentioned above is easily transmitted to the seal ring.
(4) There is a case that the sealing device of the present invention is installed to the annular installation groove which is provided in the shaft hole inner peripheral surface of the cylinder. In this case, if the end surface portion of the seal ring comes into close contact with the side surface portion of the installation groove, a closure is formed here, and there is a risk that the accumulated pressure in the lip packing back surface side does not run into the outer lip. Accordingly, the present invention is structured such that the flow path is provided in the end surface portion of the seal ring and/or the side surface portion of the installation groove, and the accumulated pressure runs into the outer lip through this flow path. The flow path is generally formed as a groove shape which extends in a diametrical direction.

The sealing device in accordance with the present invention can be used in the pump device, and is particularly used in the pump device described in claim 7 mentioned above. In the pump device described in claim 7, the seal ring and the back ring construct the sealing device, and the sealing device and the seal member construct the sealing mechanism.

### Effect of the Invention

The present invention achieves the following effects.

In other words, in the present invention, as mentioned above, in the sealing device constructed by the combination of the seal ring and the back ring or the pump device using the same, the back ring is constructed by the lip packing, and the lip packing is provided with the sealing action which relieves the accumulated pressure to the space in one side in the axial direction. Accordingly, it is possible to dissolve or reduce the pressure accumulating phenomenon which is generated in the space in another side in the axial direction. In accordance with this, it is possible to prevent a leakage of the sealed fluid from the atmospheric air side seal member to the outer portion of the pump and a reduction of a sealing performance of the atmospheric air side seal member, by releasing the pressure accumulating phenomenon between the sealing device of the sealing device installing equipment such as the pump or the like, and another side in the axial direction, for example, the atmospheric air side seal member, and it is possible to reduce a limit of a frequency in use of the sealing device installing equipment such as the pump or the like. Further, since the annular protrusion for setting the diametrical direction compression margin is integrally provided in the outer peripheral surface of the annular base portion in the lip packing, it is possible to secure a pressing load which presses the seal ring against the shaft. Accordingly, it is possible to provide the sealing device which is provided with the accumulated pressure relief function and can achieve an excellent sealing performance. Since the annular protrusion is provided with the flow path for introducing the accumulated pressure to the outer lip in a part on a circumference, the annular protrusion does not obstruct a flow of the accumulated pressure. If the flow path is formed as a groove shape which is provided on the outer peripheral surface of the annular protrusion, it can be easily processed.

Further, in addition to this, if it is set such that the diametrical direction compression margin of the groove bottom portion between the inner lip and the outer lip is not provided, the inner peripheral surface of the annular base portion and the inner peripheral surface of the inner lip in the lip packing are formed as the cylindrical surface shape which is straight in the axial direction over a whole length in the axial direction, and the flow path for introducing the accumulated pressure to the outer lip is provided in the another end surface portion in the axial direction of the seal ring and/or in another side surface portion in the axial direction of the installation groove, it is possible to smoothen the accumulated pressure relief action by opening and closing the outer lip.

Further, in the case that the sealing device in accordance with the present invention is used as the shaft seal of the pump device such as the pump device for controlling the brake in the vehicle such as the motor vehicle or the like, the effects mentioned above can be obtained in the seal or the pump device.

### BRIEF EXPLANATION OF THE DRAWINGS

Fig. 1 is a cross sectional view of a substantial part of a sealing device in accordance with an embodiment of the present invention;
Fig. 2 is an enlarged cross sectional view of a substantial part of a lip packing provided in the sealing device;
Fig. 3 is a cross sectional view along a line C-C in Fig. 2, in which Fig. 3A is a view showing a shape of a flow path in a free state before an installation, and Fig. 3B is a view showing a shape of the flow path in a deformed state after the installation;
Fig. 4 is a cross sectional view showing another example of the flow path, in which Fig. 4A is a view showing a shape of a flow path in a free state before an installation, and Fig. 4B is a view showing a shape of the flow path in a deformed state after the installation;
Fig. 5 is a cross sectional view showing a U packing in accordance with a comparative example, in which Fig. 5A is a view showing a state before a pressure is applied, and Fig. 5B is a view showing a state in which the pressure is applied;
Fig. 6 is a cross sectional view of a substantial part of a sealing device in accordance with another embodiment of the present invention;
Fig. 7 is a cross sectional view of a substantial part of a pump device in accordance with an embodiment of the present invention;
Fig. 8 is a cross sectional view of a substantial part of a pump device in accordance with a comparative example;
Fig. 9 is a cross sectional view of a substantial part of a pump device in accordance with a conventional example; and
Fig. 10 is a cross sectional view of a substantial part of a sealing device in accordance with a conventional example.

### Description of Reference Numerals

1 sealing device
11 seal ring
11 a end surface portion
12 sliding surface
13 retention groove
13a wall surface
14 notch
15, 27, 66 flow path
21 back ring
22 lip packing
23 annular base portion
23a, 24a inner peripheral surface
24 inner lip
25 outer lip
25a outer lip leading end portion
25b outer lip base end portion
26 annular protrusion
28 groove bottom portion
51 pump device
52 rotary type pump mechanism
53, 53a, 53b, 53c cylinder
54 casing
55 intake side pipe line
56 discharge side pipe line
57 shaft insertion hole
58 bearing
59 motor
60 shaft
61 inner rotor
62 outer rotor
63 seal member
64 installation groove
64a side surface portion
65 rotation preventing member
A axial direction one space
B axial direction another space (intermediate chamber)
D diametrical direction compression margin

### DETAILED DESCRIPTION OF PREFERRED EMBODIMENT

The following embodiments are included in the present invention.
(1) A lip is open at a time when an accumulated pressure is generated, and the accumulated pressure can be relieved, by changing a back ring of a seal (a sealing device) from a squeeze type to a lip packing (a rubber lip packing).
(2) By setting a flow path (a slit or a through hole) in a groove wall surface in an atmospheric air side or an atmospheric air side of a seal ring (a resin seal ring), the pressure accumulation by sealing by means of the groove wall surface and the seal ring can be avoided, and it is possible to relieve the pressure toward the lip packing.
(3) Since the surface pressure applied to the inner peripheral surface of the seal ring by the back ring is lowered by setting the back ring to the lip packing, the surface pressure is compensated by attaching a protrusion having a compression margin to a back portion (an annular base portion). In this case, in order to prevent the accumulated pressure from being sealed by a compression margin of the back portion, a flow path (a slit or a through hole) for introducing the accumulated pressure to the lip portion is set to the protrusion of the back portion.
(4) The lip packing is generally set such that a compression margin is provided in a groove bottom while taking a durability into consideration, however, the lip packing in accordance with the present invention is set such that the compression margin is not provided in the groove bottom in order to improve an accumulated pressure relief function.
(5) The inner peripheral side can be stably brought into contact with the seal ring by forming the inner peripheral side coming into contact with the seal ring of the lip packing as the cylindrical inner peripheral surface which is straight in the axial direction. In accordance with this, the outer lip tends to be actuated at a time when the accumulated pressure is generated, and an accumulated pressure relief effect can be stably obtained. Further, it is possible to efficiently transmit the surface pressure by the back portion protrusion to the seal ring, by forming the inner peripheral side flat.
(6) It is possible to smoothly relieve the accumulated pressure without preventing the accumulated pressure relief action from the outer lip, by making a length in the axial direction of the outer lip of the lip packing shorter than a length in the axial direction of the inner peripheral side lip.
(7) The lip packing is set such that the lip is thin and long, in such a manner that the releasing action smoothly operates at a time when the accumulated pressure is generated.
(8) The lip packing is set to 60 degree to 80 degree (rubber hardness Hs: based on JIS K6253 and measured by type A durometer), in such a manner that the releasing action smoothly operates at a time when the accumulated pressure is generated, and a pressure resistance can be secured.
(9) In order to use the lip packing in the pump for braking, an EPDM having a resistance property is used for a brake fluid.
(10) Since a motion in a rotating direction is not transmitted to the packing by setting a rotation prevention in the seal ring, an abrasion, a breakage and the like of the lip are not generated, and it is possible to make a service life long. In this case, the rotation prevention may be constructed by a key, and a flange, a width across flat, a plurality of grooves and the like as described in the patent document 1 mentioned above, in addition to a combination of a notch and a pin.

### Embodiment

Next, a description will be given of embodiments in accordance with the present invention with reference to the accompanying drawings.

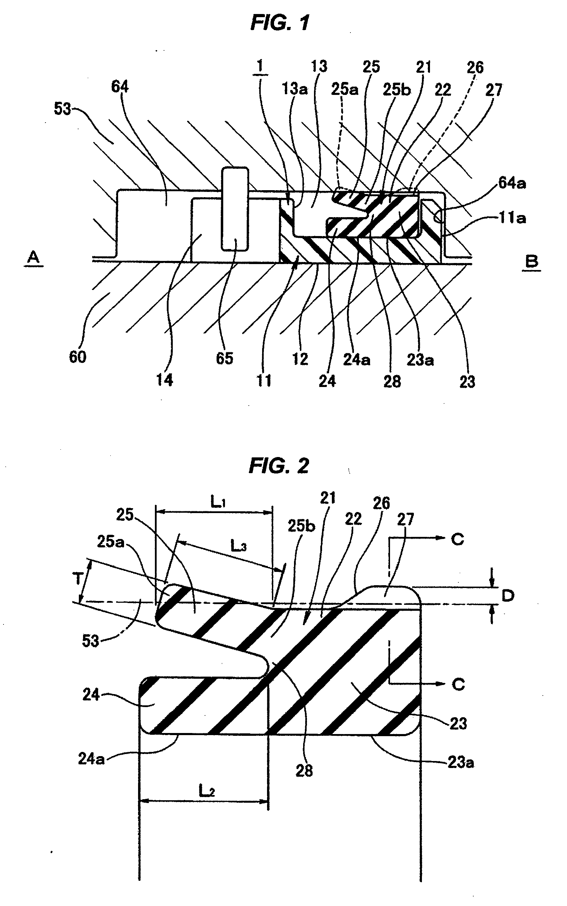

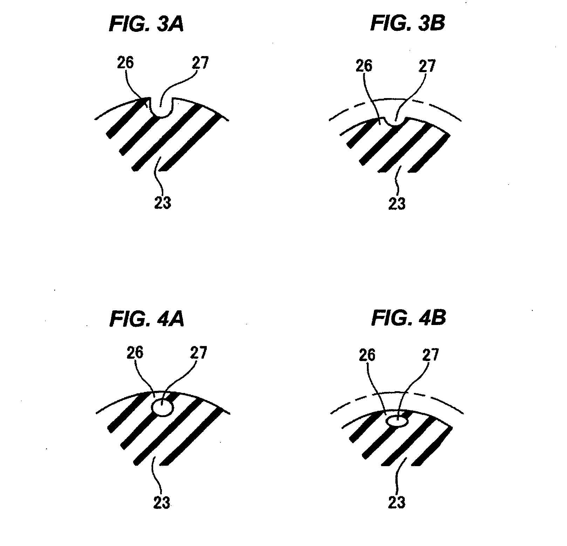

Fig. 1 shows a cross section of a substantial part of a sealing device 1 in accordance with an embodiment of the present invention. Further, Fig. 2 shows an enlarged cross section of a substantial part of a lip packing 22 serving as a back ring 21 which is provided in the sealing device 1, and Fig. 3 shows a cross section along a line C-C in Fig. 2. The sealing device 1 in accordance with the embodiment is used as a shaft seal of a pump device for controlling a brake in a vehicle such as a motor vehicle or the like, together with an atmospheric air side seal member or the like, and is structured as follows. A left direction of the drawing is one side in an axial direction and corresponds to a sealed fluid side, and a right direction is another side in the axial direction and corresponds to an atmospheric air side.

In other words, the sealing device 1 is structured such as to be installed between a cylinder (a housing) 53 and a shaft 60 which is inserted to a shaft hole of the cylinder 53 so as to inhibit the sealed fluid from leaking from one space A in the axial direction to another space (an intermediate chamber) B in the axial direction, and has a seal ring 11 which is arranged in an inner periphery of the shaft hole of the cylinder 53 in a state of being prevented from rotating so as to slidably come into close contact with a peripheral surface of the shaft 60, and a lip packing 22 which is arranged in an outer periphery of the seal ring 11 so as serve as a back ring 21 sealing between the seal ring 11 and the cylinder 53. Since an annular installation groove 64 is provided in an inner peripheral surface of the shaft hole of the cylinder 53, the sealing device 1 is installed into the installation groove 64.

The seal ring 11 is formed as a cylindrical shape by a predetermined resin material, has a sliding surface 12 with respect to the shaft 60 in an inner peripheral surface thereof, and has an annular retention groove 13 for retaining the lip packing 22 in an outer peripheral surface thereof. Further, a circumferentially partial notch 14 is provided in one end portion in the axial direction, and a rotation preventing member 65 such as a pin or the like provided in a rising manner in the cylinder 53 is engaged with the notch 14, whereby the rotation prevention is achieved. As a resin material of the seal ring 11, a PTFE is desirable, and a PA, a PFA, a PEEK, a POM, a PPS or the like may be employed.

The lip packing 22 is formed as an annular shape by a predetermined rubber-like elastic material, for example, an EPDM rubber, has an annular base portion 23 which is formed as an approximately rectangular shape in a cross section, and an inner lip 24 and an outer lip 25 are integrally provided in one end portion in the axial direction of the annular base portion 23. Further, an annular protrusion 26 for setting a diametrical direction compression margin D (refer to Fig. 2) is integrally provided in another end portion in the axial direction in an outer peripheral surface of the annular base portion 23.

If the seal ring 11 and the lip packing 22 having the structures mentioned above are combined and installed, the sliding surface 12 in the inner peripheral surface of the seal ring 11 slidably comes into close contact with the peripheral surface of the shaft 60, thereby sealing between the seal ring 11 and the shaft 60. Further, the outer lip 25 of the lip packing 22 comes into close contact with the inner peripheral surface of the cylinder 53 in a leading end portion 25a thereof, thereby sealing between lip packing 22 and the cylinder 53. Further, since the annular protrusion 26 comes into close contact with the inner peripheral surface of the cylinder 53 and the diametrical direction compression margin D is generated, the lip packing 22 comes into close contact with the seal ring 11, thereby sealing between the lip packing 22 and the seal ring 11. Since the compression margin D by the annular protrusion 26 runs to the seal ring 11, the seal ring 11 comes into close contact with the peripheral surface of the shaft 60 by an appropriate contact surface pressure.

The outer lip 25 comes into close contact with the inner peripheral surface of the cylinder 53 as mentioned above so as to seal the sealed fluid, however, is provided with a directionality with respect to a sealing action, and is pushed by a pressure so as to move away from the cylinder 53 if an accumulated pressure is applied from a back surface direction, thereby releasing the accumulated pressure. The accumulated pressure is generated in a space (an intermediate chamber) B between the sealing device 1 and the atmospheric air side seal member. Therefore, in accordance with the sealing device 1, it is possible to prevent a leakage from the atmospheric air side seal member to an external portion of the pump and a reduction of a sealing performance of the atmospheric air side seal member, by releasing the accumulated pressure in the space B, and it is possible to absorb a limit of a frequency in use of a sealing device installing equipment such as the pump or the like.

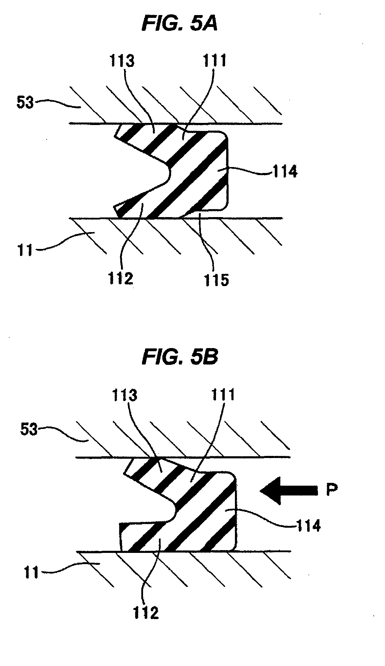

Further, in the sealing device 1, in order to smoothen an accumulated pressure relief action by the outer lip 25 mentioned above, the following structures are added.
(1) If the annular protrusion 26 is integrally provided in the outer peripheral surface of the annular base portion 23 in the lip packing 22 as mentioned above, the annular protrusion 26 comes into close contact with the inner peripheral surface of the cylinder 53 over a whole periphery so as to come to a dam (a seal dam), and there is a risk that the accumulated pressure in the space B does not run into the outer lip 25. Accordingly, the sealing device 1 is structured such that a flow path 27 passing through in the axial direction is provided in the annular protrusion 26, and the accumulated pressure runs into the outer lip 25 through the flow path 27. As shown in Fig. 3, the flow path 27 is provided as a groove-like flow path which is formed in an outer peripheral surface of the annular protrusion 26, however, may be formed as a through hole shape as shown in Fig. 4. The flow path 27 is provided at one position or a plurality of positions on a circumference. In this case, in Fig. 3 and Fig. 4, each of Fig. 3A and Fig. 4A shows a shape of the flow path 27 in a free state before an installation, and if this is installed to the cylinder 53, it deforms as shown in each of Fig. 3B and Fig. 4B on the basis of a relation of the diametrical direction compression margin D, however, a cavity portion is secured even after the deformation, and the accumulated pressure can pass through.
(2) Since the lip packing 22 is formed such a shape that the inner lip 24 and the outer lip 25 are integrally provided in one end portion in the axial direction of the annular base portion 23, it may be called as a U packing on the basis of its cross sectional shape. The conventional U packing is generally structured such that the diametrical direction compression margin is set in the groove bottom portion 28 between both the lips 24 and 25, however, if the compression margin is set in the groove bottom portion 28 as mentioned above, there is a risk that the outer lip 25 can not smoothly operate so as to open and close. Accordingly, in the sealing device 1, a base end portion 25b of the outer lip 25 and the annular base portion 23 do not come into close contact with the cylinder 53 in the state in which the annular protrusion 26 and a leading end portion 25a of the outer lip 25 in the lip packing 22 come into close contact with the cylinder 53, thereby setting such that the diametrical direction compression margin of the groove bottom portion 28 between both the lips 24 and 25 is not provided. In accordance with this, since the outer lip 25 is not constrained by the compression margin, the outer lip 25 easily operates so as to open and close. Accordingly, the outer diameters of the annular protrusion 26 and the outer lip leading end portion are set to be larger than the inner diameter of the cylinder 53, however, the outer diameters of the outer lip base end portion 25b and the annular base portion 23 are set to a magnitude which is equal to or less than the inner diameter of the cylinder 53.
(3) As shown in Fig. 5A as a comparative example, a conventional U packing 111 is generally formed as such a shape that an inner lip 112 and an outer lip 113 are open as a trumpet shape in a cross sectional shape thereof, however, since an annular base portion 114 is lifted up by the inner lip 112 in a state in which the U packing 111 is installed to the outer periphery of the seal ring 11, in the shape mentioned above, a gap 115 in a diametrical direction is generated between the annular base portion 114 and the seal ring 11. Therefore, as shown in Fig. 5B, if the accumulated pressure is increased, the U packing 111 first of all elastically deforms in such a manner as to do away with this gap 115, and a releasing motion of the outer lip 113 is delayed at this degree, so that it becomes hard to control a timing for releasing. Accordingly, in the sealing device 1, since the inner peripheral surface 23a of the annular base portion 23 and the inner peripheral surface 24a of the inner lip 24 in the lip packing 22 are formed as the cylindrical surface shape which is straight in the axial direction over a whole length in the axial direction from the beginning, and the gap in the diametrical direction is not generated from the beginning in accordance with this, it becomes easy to control the timing for releasing. Further, in accordance with the shape mentioned above, the diametrical direction pressing load by the annular protrusion 26 is easily transmitted to the seal ring 11.
(4) An axial direction length L₁ of the outer lip 25 in the lip packing 22 is set to be shorter than an axial direction length L₂ of the inner lip 24 (L₁ < L₂), whereby the outer lip 25 is structured such as to smoothly operate so as to open. In other words, in the case that the axial direction length L₁ of the outer lip 25 is longer than the axial direction length L₂ of the inner lip 24, the leading end portion of the outer lip 25 tends to interfere with a wall surface (a side surface portion of the retention groove 13) 13a of the seal ring 11, at a time when the outer lip 25 opens and closes for releasing the accumulated pressure, and there is a case that the outer lip 25 does not smoothly operate so as to open. On the contrary, if the axial direction length L₁ of the outer lip 25 is set to be shorter than the axial direction length L₂ of the inner lip 24, the inner lip 24 in advance comes into contact with the wall surface 13a of the seal ring 11 at a time when the accumulated pressure is applied, a space for a deformation of the outer lip 25 can be secured, and the outer lip 25 does not interfere with the wall surface 13a of the seal ring 11.
(5) The outer lip 25 in the lip packing 22 is formed thin and long, that is, specifically, a length L₃ of the outer lip 25 is set so as to become equal to or more than twice a thickness T thereof (L₃ ≧ 2T), whereby the outer lip 25 is structured such as to smoothly operate so as to open. In the case that the length L₃ of the outer lip 25 is less than twice the thickness T, there is a case that the outer lip 25 does not smoothly operate so as to open in accordance with a material or a hardness of the lip packing 22.
(6) The rubber hardness of the lip packing 22 is set to 60 degree to 80 degree, whereby the outer lip 25 is structured such as to smoothly operate so as to open. Further, a pressure resistance of the lip packing 22 is secured in this hardness.

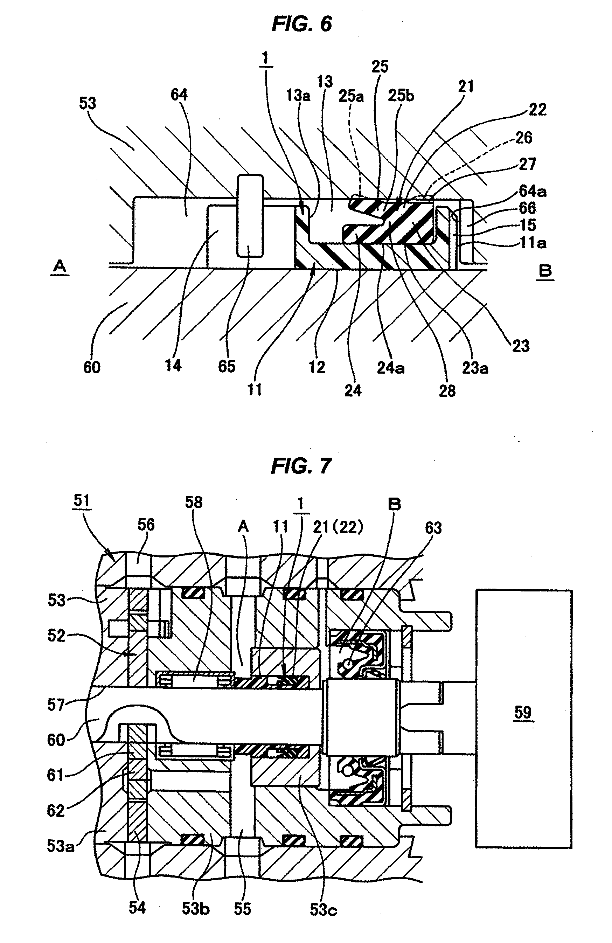

Further, since the sealing device 1 is structured as mentioned above such as to be installed to the annular installation groove 64 which is provided in the inner peripheral surface of the shaft hole of the cylinder 53, a closure is formed here, and there is a risk that the accumulated pressure in the space B does not run into the outer lip 25 if the end surface portion 11a of the seal ring 11 comes into close contact with a side surface portion 64a of the installation groove 64. Accordingly, in order to cope with this, in the other embodiment shown in Fig. 6, groove-shaped flow paths 15 and 66 each extending in a diametrical direction are provided in the another end surface portion 11 a in the axial direction of the seal ring 11 and the another side surface portion 64a in the axial direction of the installation groove 64, and the accumulated pressure in the space B is structured such as to run into the outer lip 25 through the flow paths 15 and 66. The flow paths 15 and 66 are provided at one position or a plurality of positions on a circumference. Further, the flow paths 15 and 66 may be provided in any one.

In this case, the annular protrusion 26 may be provided as an annular protrusion protruding to an inner side in an opposed inner peripheral surface of the cylinder 53 without being limited to the outer peripheral surface of the annular base portion 23 of the lip packing 22.

Next, a description will be given of a pump device 51 in accordance with an embodiment of the present invention. The pump device 51 in accordance with the embodiment is provided with the sealing device 1 and is structured as follows.

In other words, as shown in Fig. 7, the pump device 51 is structured by accommodating members shown below into a concave portion which is formed in the cylinder 53 of a hydraulic control unit of the brake apparatus for the vehicle. A cylinder (a first cylinder) 53a and a cylinder (a second cylinder) 53b are arranged in both sides in an axial direction of a rotary type pump mechanism 52 in one of a plurality of pump devices 51, and an annular casing 54 is arranged in an outer peripheral side of the rotary type pump mechanism 52. The cylinder 53a, the casing 54 and the cylinder 53b are integrated by a welding of a whole periphery of an outer periphery or an energizing in an axial direction by a spring (not shown), and accommodates the rotary type pump mechanism 52. Further, in the cylinder 53b, there are formed an intake side pipe line 55 which is communicated with an intake port of the rotary type pump mechanism 52, and a discharge side pipe line 56 which is communicated with a discharge port.

A shaft insertion hole 57 is formed in an approximately center portion of the cylinders 53a and 53b, and a cylinder (a third cylinder) 53c which is pressed into an inner periphery of the cylinder 53b, and a drive shaft 60 which is rotated by a motor 59 is rotatably supported via a plurality of bearings 58 including bearings which are not illustrated.

The rotary type pump mechanism 52 is constructed by an inner rotor 61 which is fixed to the drive shaft 60 in such a manner as to integrally rotate via a key (not shown), and in which an outer teeth portion is formed, and an outer rotor 62 to which this is fitted so as to be eccentric to an inner peripheral side, and in which an inner teeth portion is formed, and the outer rotor 62 is rotatably accommodated within a casing 54 which is arranged in an outer peripheral side. An intake side pipe line 55 is communicated with one side of an engagement portion between the outer teeth portion and the inner teeth portion of both the rotors 61 and 62, a discharge side pipe line 56 is communicated with another side, the outer rotor 62 is rotated in conjunction with a rotation of the inner rotor 61 by the drive shaft 60, and the rotary type pump mechanism 52 sucks and discharges the fluid on the basis of a volumetric capacity change of the engagement space between both the rotors 61 and 62.

A seal ring 11 coming into contact with a peripheral surface of the drive shaft 60 slidably and in a liquid tight manner is arranged in an inner periphery of the shaft insertion hole 57 of the cylinder 53b. In an outer periphery of the seal ring 11, there is arranged a lip packing (a lip seal) 22 which seals between the seal ring 11 and the shaft insertion hole 57 of the cylinder 53b and corresponds to the back ring 21. A seal member 63 which is a known U packing or an oil seal is arranged in an inner periphery of an open end of the shaft insertion hole 57, and the seal member 63 slidably comes into contact with the drive shaft 60 in an inner periphery thereof. In the axial direction, an intermediate chamber B is formed between the seal ring 11, the lip packing 22 and the seal member 63.

In an opposite side to the intermediate chamber B with respect to the seal ring 11 and the lip packing 22 in the axial direction, a space A is formed between the seal ring 11, the lip packing 22 and the rotary type pump mechanism 52, and the space A is communicated with the intake side pipe line 55.

As mentioned above, both the rotors 61 and 62 come into close contact with the cylinders 53a and 53b in the axial direction, however, since both the rotors 61 and 62 rotate while coming into slidable contact with respect to the cylinders 53a and 53b, the fluid which leaks only slightly through these gaps passes between the bearings 58 so as to flow into the periphery of the drive shaft 60 and the space A. Further, the fluid flows into the space A from the intake side pipe line 55. In conjunction with the rotation of the drive shaft 60, the fluid existing in the periphery of the drive shaft 60 runs into the intermediate chamber B while passing through the gap between the drive shaft 60 and the seal ring 11 only at a slight amount, on the basis of a membrane pressure phenomenon. If a frequency in operation of the pump device 51 becomes high, an amount of the fluid fed to the intermediate chamber B from the space A on the basis of the membrane pressure phenomenon is increased little by little, and a pressure accumulating phenomenon that the pressure within the intermediate chamber B rises up is generated.

Accordingly, if the lip packing 22 is structured such that the outer lip 25 is pushed by an internal pressure of the intermediate chamber B so as to be spaced from the cylinder 53c, as long as a differential pressure between the internal pressure of the intermediate chamber B and the space A is a certain fixed pressure value, for example, equal to or less than a value which does not deteriorate the sealing performance of the seal member 63, by installing the lip packing 22 mentioned already, as the back ring 21, it is possible to relieve the accumulated pressure in the intermediate chamber B to the space A, and it is possible to actuate the pump device 51 without limiting a frequency in use.

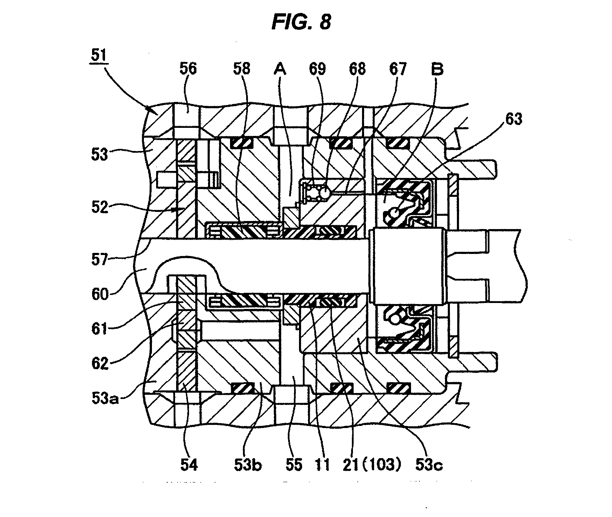

In this case, as shown in Fig. 8 as a comparative example, as a structure which relieves the accumulated pressure in the space B, there is a structure constructed by a return flow path 67 which passes through the cylinder 53c and communicates the space B with the intake side pipe line 55, and a check valve 68 which is energized by a spring 69 provided within the cylinder 53c so as to set a predetermined valve opening pressure, in the middle of the return flow path 67, while keeping the back ring 21 as the conventional squeeze packing 103. In accordance with this structure, it is possible to prevent a leakage from the atmospheric air side seal member 63 to the external portion of the pump device 51 and a reduction of the sealing performance of the atmospheric air side seal member 63, and it is possible to absorb a limit of a frequency in use of the pump device 51, by releasing the accumulated pressure in the space B, in the same manner as the sealing device 1. On the contrary, the sealing device 1 mentioned above is excellent in a point that the function of releasing the accumulated pressure in the space B to the intake side pipe line 55 is provided in the lip packing 22 which seals between the shaft 60 and the cylinder 53 without making the cylinder 53 complex and large in size in the diametrical direction, thereby simplifying the structure.

## Claims

1. A sealing device (1) installed between a cylinder (53) and a shaft (60) which is inserted to a shaft hole of said cylinder (53) so as to inhibit a sealed fluid from leaking from one space (A) in an axial direction to another space (B) in the axial direction, the sealing device comprising:
a seal ring (11) which is arranged in an inner periphery of the shaft hole of said cylinder (53) so as to slidably come into close contact with a peripheral surface of said shaft (60); and
a back ring (21) which is arranged in an outer periphery of said seal ring (11) so as to seal between said seal ring (11) and the cylinder (53),
wherein said back ring (21) is constructed by a lip packing (22) which is provided with an inner lip (24) and an outer lip (25) in one end portion in one side of an axial direction of an annular base portion (23), and
wherein said outer lip (25) has a function of sealing by being in close contact with said cylinder (53) for sealing said sealed fluid and is provided with a directionality with respect to the sealing action such that said outer lip (25) is capable of releasing an accumulated pressure by being pushed by a pressure so as to be spaced from said cylinder (53) in a state in which said accumulated pressure is generated in the another space (B) and applied on a back surface side of said outer lip (25) in said axial direction,
**characterized in that**
said back ring (21) is provided with an annular protrusion (26) setting a diametrical direction compression margin (D) in said back ring (21) in an outer peripheral surface of said annular base portion (23) and said back ring (21) having a function of sealing by being in close contact with said seal ring (11), and
said annular protrusion (26) is provided with a flow path (27) for introducing said accumulated pressure to said outer lip (25).

2. A sealing device (1) as claimed in claim 1, wherein said flow path (27) is constructed by a groove-shaped flow path.

3. A sealing device (1) as claimed in claim 1 or 2, wherein an outer lip base end portion (25b) and said annular base portion (23) do not come into close contact with the cylinder (53) in a state in which said annular protrusion (26) and an outer lip leading end portion (25a) in said lip packing (22) come into close contact with the cylinder (53), thereby setting such that a diametrical direction compression margin of a groove bottom portion (28) of the lip packing (22) between both the lips (24, 25) is not provided.

4. A sealing device (1) as claimed in any one of claims 1 to 3, wherein an inner peripheral surface (23a) of the annular base portion (23) and an inner peripheral surface (24a) of the inner lip (24) in said lip packing (22) are formed as a cylindrical surface shape which is straight in an axial direction over a whole length in the axial direction.

5. A sealing device (1) as claimed in any one of claims 1 to 4, wherein an annular installation groove (64) for installing said sealing device (1) is provided in an inner peripheral surface of the shaft hole of said cylinder (53), and a flow path (15, 66) for introducing said accumulated pressure to said outer lip (25) is provided in one end surface portion (11a) in another side of an axial direction of said seal ring (11) and/or side surface portion (64a) in another side of an axial direction of said installation groove (64).

6. A sealing device (1) as claimed in any one of claims 1 to 5, wherein said sealing device (1) is used as a shaft seal of a pump device (51) for controlling a brake in a vehicle such as a motor vehicle or the like.

7. A pump device (51) wherein a drive shaft (60) is inserted to a shaft insertion hole (57) provided in a cylinder (53, 53a, 53b, 53c), the pump device (51) sucks and discharges a fluid by driving a rotary type pump mechanism (52) accommodated within said cylinder (53, 53a, 53b, 53c) via said drive shaft (60), and increases a pressure of the fluid, the pump device (51) comprising:
a sealing mechanism (1, 63) arranged between said pump mechanism (52) and an open end of said shaft insertion hole (57), the sealing mechanism (1, 63) comprising:
a seal ring (11) which is arranged in a liquid tight manner in an inner periphery of said shaft insertion hole (57) so as to slidably come into close contact with a peripheral surface of said drive shaft (60);
a back ring (21) which is arranged in an outer periphery of said seal ring (11) so as to seal between said seal ring (11) and said cylinder (53, 53a, 53b, 53c); and
a seal member (63) which is arranged in a liquid tight manner in an inner periphery of the open end of said shaft insertion hole (57) so as to slidably come into close contact with the peripheral surface of said drive shaft (60) and form an intermediate chamber (B) between said seal ring (11), said back ring (21) and said seal member (63),
wherein said back ring (21) is constructed by a lip packing (22) which is provided with an inner lip (24) and an outer lip (25) in one end portion in an axial direction of an annular base portion (23), and **characterized in that** said back ring (21) is provided with an annular protrusion (26) setting a diametrical direction compression margin (D) in said back ring (21) in an outer peripheral surface of said annular base portion (23) and said back ring (21) having a function of sealing by being in close contact with said seal ring (11),
wherein said outer lip (25) has a function of sealing by being in close contact with said cylinder (53, 53a, 53b, 53c) for sealingsaid sealed fluid and is provided with a directionality with respect to the sealing action such that said outer lip (25) is capable of releasing an accumulated pressure to a space (A) between said pump mechanism (52), said seal ring (11) and said lip packing (22) by being pushed by a pressure so as to be spaced from said cylinder (53, 53a, 53b, 53c) in a state in which said accumulated pressure is generated in said intermediate chamber (B) and applied on a back surface side of said outer lip (25),
wherein said annular protrusion (26) is provided with a flow path (27) for introducing said accumulated pressure to said outer lip (25).

## Patentansprüche

1. Dichtungsvorrichtung (1), die zwischen einem Zylinder (53) und einer Welle (60) eingebaut ist, die in ein Wellenloch des Zylinders (53) eingesetzt wird, um zu verhindern, dass ein abgedichtetes Fluid von einem Raum (A) in einer axialen Richtung zu einem anderen Raum (B) in der axialen Richtung ausströmt, wobei die Dichtungsvorrichtung Folgendes aufweist:
einen Dichtungsring (11), der an einem Innenumfang des Wellenlochs des Zylinders (53) angeordnet ist, um mit einer Umfangsfläche der Welle (60) gleitbar in engen Kontakt zu kommen; und
einen hinteren Ring (21), der an einem Außenumfang des Dichtungsrings (11) angeordnet ist, um zwischen dem Dichtungsring (11) und dem Zylinder (53) abzudichten,
wobei der hintere Ring (21) durch einen Lippendichtungsring (22) gebildet ist, der mit einer Innenlippe (24) und einer Außenlippe (25) in einem Endabschnitt an einer Seite einer axialen Richtung eines ringförmigen Basisabschnitts (23) vorgesehen ist, und
wobei die Außenlippe (25) eine Funktion zum Abdichten hat, indem sie mit dem Zylinder (53) zum Abdichten des abgedichteten Fluids in engem Kontakt ist, und mit einer Richtungsabhängigkeit in Bezug auf die Dichtungswirkung derart vorgesehen ist, dass die Außenlippe (25) in der Lage ist, einen angestauten Druck freizugeben, indem sie durch einen Druck gedrängt wird, um von dem Zylinder (23) in einem Zustand beabstandet zu werden, in dem der angestaute Druck in dem anderen Raum (B) erzeugt wird und auf eine hintere Flächenseite der Außenlippe (25) in der axialen Richtung aufgebracht wird,
**dadurch gekennzeichnet, dass**
der hintere Ring (21) mit einem ringförmigen Vorsprung (26) vorgesehen ist, der einen Durchmesserrichtungskompressionsspielraum (D) in dem hinteren Ring (21) an einer Außenumfangsfläche des ringförmigen Basisabschnitts (23) festlegt, und der hintere Ring (21) eine Funktion zum Abdichten hat, indem er mit dem Dichtungsring (11) in engem Kontakt ist, und
der ringförmige Vorsprung (26) mit einem Strömungsweg (27) zum Einbringen des angestauten Drucks zu der Außenlippe (25) vorgesehen ist.

2. Dichtungsvorrichtung (1) nach Anspruch 1, wobei der Strömungsweg (27) durch einen nutförmigen Strömungsweg gebildet ist.

3. Dichtungsvorrichtung (1) nach Anspruch 1 oder 2, wobei ein Außenlippenbasisendabschnitt (25b) und der ringförmige Basisabschnitt (23) mit dem Zylinder (53) in einem Zustand nicht in Kontakt kommen, in dem der ringförmige Vorsprung (26) und ein Außenlippenvorderendabschnitt (25a) in dem Lippendichtungsring (22) mit dem Zylinder (53) in engen Kontakt kommt, um dadurch festzulegen, dass ein Durchmesserrichtungskompressionsspielraum eines Nutbodenabschnitts (28) des Lippendichtungsrings (22) zwischen beiden Lippen (24, 25) nicht vorgesehen ist.

4. Dichtungsvorrichtung (1) nach einem der Ansprüche 1 bis 3, wobei eine Innenumfangsfläche (23a) des ringförmigen Basisabschnitts (23) und eine Innenumfangsfläche (24a) der Innenlippe (24) in dem Lippendichtungsring (22) als eine zylindrische Flächenform ausgebildet sind, die in einer axialen Richtung über eine gesamte Länge in der axialen Richtung gerade ist.

5. Dichtungsvorrichtung (1) nach einem der Ansprüche 1 bis 4, wobei eine ringförmige Einbaunut (64) zum Einbauen der Dichtungsvorrichtung (1) in einer Innenumfangsfläche des Wellenlochs des Zylinders (53) vorgesehen ist und ein Strömungsweg (15, 66) zum Einbringen des angestauten Drucks zu der Außenlippe (25) in einem Endflächenabschnitt (11a) an einer anderen Seite einer axialen Richtung des Dichtungsrings (11) und/oder in einem Seitenflächenabschnitt (64a) an einer anderen Seite einer axialen Richtung der Einbaunut (64) vorgesehen ist.

6. Dichtungsvorrichtung (1) nach einem der Ansprüche 1 bis 5, wobei die Dichtungsvorrichtung (1) als eine Wellendichtung einer Pumpenvorrichtung (51) zum Steuern einer Bremse in einem Fahrzeug wie z.B. einem Motorfahrzeug oder dergleichen verwendet wird.

7. Pumpenvorrichtung (51), wobei eine Antriebswelle (60) in einem Welleneinsetzloch (57) eingesetzt ist, das in einem Zylinder (53, 53a, 53b, 53c) vorgesehen ist, wobei die Pumpenvorrichtung (51) ein Fluid durch Antreiben eines Pumpenmechanismus der Drehbauart (52), der innerhalb des Zylinders (53, 53a, 53b, 53c) aufgenommen ist, über die Antriebswelle (60) ansaugt und abgibt und einen Druck des Fluids erhöht, wobei die Pumpenvorrichtung (51) Folgendes aufweist:
einen Dichtungsmechanismus (1, 63), der zwischen dem Pumpenmechanismus (52) und einem offenen Ende des Welleneinsetzlochs (57) angeordnet ist, wobei der Dichtungsmechanismus (1, 63) Folgendes aufweist:
einen Dichtungsring (11), der in einer flüssigkeitsdichten Weise an einem Innenumfang des Welleneinsetzlochs (57) angeordnet ist, um mit einer Umfangsfläche der Antriebswelle (60) gleitbar in Kontakt zu kommen;
einen hinteren Ring (21), der an einem Außenumfang des Dichtungsrings (11) angeordnet ist, um zwischen dem Dichtungsring (11) und dem Zylinder (53, 53a, 53b, 53c) abzudichten; und
ein Dichtungsbauteil (63), das in einer flüssigkeitsdichten Weise an einem Innenumfang des offenen Endes des Welleneinsetzlochs (57) angeordnet ist, um mit der Umfangsfläche der Antriebswelle (60) gleitbar in Kontakt zu kommen, und um eine Zwischenkammer (B) zwischen dem Dichtungsring (11), dem hinteren Ring (21) und dem Dichtungsbauteil (63) auszubilden,
wobei der hintere Ring (21) durch einen Lippendichtungsring (22) gebildet ist, der mit einer Innenlippe (24) und einer Außenlippe (25) an einem Endabschnitt in einer axialen Richtung eines ringförmigen Basisabschnitts (23) vorgesehen ist, und
**dadurch gekennzeichnet, dass**
der hintere Ring (21) mit einem ringförmigen Vorsprung (26) vorgesehen ist, der einen Durchmesserrichtungskompressionsspielraum (D) in dem hinteren Ring (21) an einer Außenumfangsfläche des ringförmigen Basisabschnitts (23) festlegt, und der hintere Ring (21) eine Funktion zum Abdichten hat, indem er mit dem Dichtungsring (11) in engem Kontakt ist,
wobei die Außenlippe (25) eine Funktion zum Abdichten hat, indem sie mit dem Zylinder (53, 53a, 53b, 53c) zum Abdichten des abgedichteten Fluids in engem Kontakt ist, und mit einer Richtungsabhängigkeit in Bezug auf die Dichtungswirkung derart vorgesehen ist, dass die Außenlippe (25) in der Lage ist, einen angestauten Druck zu einem Raum (A) zwischen dem Pumpenmechanismus (52), dem Dichtungsring (11) und dem Lippendichtungsring (22) freizugeben, indem sie durch einen Druck gedrängt wird, um von dem Zylinder (53, 53a, 53b, 53c) in einem Zustand beabstandet zu werden, in dem der angestaute Druck in der Zwischenkammer (B) erzeugt wird und auf eine hintere Flächenseite der Außenlippe (25) aufgebracht wird,
wobei der ringförmige Vorsprung (26) mit einem Strömungsweg (27) zum Einbringen des angestauten Drucks zu der Außenlippe (25) vorgesehen ist.

## Revendications

1. Dispositif d'étanchéité (1) installé entre un cylindre (53) et un arbre (60) qui est inséré dans un trou d'arbre dudit cylindre (53) afin d'empêcher un fluide enfermé de s'échapper d'un espace (A) dans une direction axiale vers un autre espace (B) dans la direction axiale, le dispositif d'étanchéité comprenant :
une bague d'étanchéité (11) qui est agencée dans une périphérie intérieure du trou d'arbre dudit cylindre (53) afin de venir de manière coulissante en contact étroit avec une surface périphérique dudit arbre (60) ; et
une contre-bague (21) qui est agencée dans une périphérie extérieure de ladite bague d'étanchéité (11) afin d'assurer l'étanchéité entre ladite bague d'étanchéité (11) et le cylindre (53),
dans lequel ladite contre-bague (21) est construite par une garniture de lèvre (22) qui est pourvue d'une lèvre intérieure (24) et d'une lèvre extérieure (25) dans une partie d'extrémité dans un côté d'une direction axiale d'une partie de base annulaire (23), et
dans lequel ladite lèvre extérieure (25) a une fonction d'étanchéité en étant en contact étroit avec ledit cylindre (53) pour assurer l'étanchéité vis-à-vis dudit fluide enfermé et est pourvue d'une directionnalité par rapport à l'action d'étanchéité de sorte que ladite lèvre extérieure (25) soit capable de libérer une pression accumulée en étant poussée par une pression afin d'être espacée dudit cylindre (53) dans un état dans lequel ladite pression accumulée est générée dans l'autre espace (B) et appliquée sur un côté de surface arrière de ladite lèvre extérieure (25) dans ladite direction axiale,
**caractérisé en ce que**
ladite contre-bague (21) est pourvue d'une saillie annulaire (26) établissant une marge de compression de direction diamétrale (D) dans ladite contre-bague (21) dans une surface périphérique extérieure de ladite partie de base annulaire (23) et ladite contre-bague (21) ayant une fonction d'étanchéité en étant en contact étroit avec ladite bague d'étanchéité (11), et
ladite saillie annulaire (26) est pourvue d'un trajet d'écoulement (27) pour introduire ladite pression accumulée sur ladite lèvre extérieure (25).

2. Dispositif d'étanchéité (1) tel que revendiqué dans la revendication 1, dans lequel ledit trajet d'écoulement (27) est construit par un trajet d'écoulement en forme de rainure.

3. Dispositif d'étanchéité (1) tel que revendiqué dans la revendication 1 ou 2, dans lequel une partie d'extrémité de base de lèvre extérieure (25b) et ladite partie de base annulaire (23) ne viennent pas en contact étroit avec le cylindre (53) dans un état dans lequel ladite saillie annulaire (26) et une partie d'extrémité avant de lèvre extérieure (25a) dans ladite garniture de lèvre (22) viennent en contact étroit avec le cylindre (53), ainsi l'établissement se fait de sorte qu'une marge de compression de direction diamétrale d'une partie de fond de rainure (28) de la garniture de lèvre (22) entre les deux lèvres (24, 25) ne soit pas prévue.

4. Dispositif d'étanchéité (1) tel que revendiqué dans l'une quelconque des revendications 1 à 3, dans lequel une surface périphérique intérieure (23a) de la partie de base annulaire (23) et une surface périphérique intérieure (24a) de la lèvre intérieure (24) dans ladite garniture de lèvre (22) se présentent sous forme de surface cylindrique qui est rectiligne dans une direction axiale sur toute une longueur dans la direction axiale.

5. Dispositif d'étanchéité (1) tel que revendiqué dans l'une quelconque des revendications 1 à 4, dans lequel une rainure d'installation annulaire (64) pour installer ledit dispositif d'étanchéité (1) est prévue dans une surface périphérique intérieure du trou d'arbre dudit cylindre (53), et un trajet d'écoulement (15, 66) pour introduire ladite pression accumulée sur ladite lèvre extérieure (25) est prévu dans une partie de surface d'extrémité (11a) dans un autre côté d'une direction axiale de ladite bague d'étanchéité (11) et/ou une partie de surface latérale (64a) dans un autre côté d'une direction axiale de ladite rainure d'installation (64).

6. Dispositif d'étanchéité (1) tel que revendiqué dans l'une quelconque des revendications 1 à 5, dans lequel ledit dispositif d'étanchéité (1) est utilisé en tant que garniture d'étanchéité d'arbre d'un dispositif de pompage (51) pour commander un frein dans un véhicule tel qu'un véhicule automobile ou autre analogue.

7. Dispositif de pompage (51) dans lequel un arbre d'entraînement (60) est inséré dans un trou d'insertion d'arbre (57) prévu dans un cylindre (53, 53a, 53b, 53c), le dispositif de pompage (51) aspire et évacue un fluide en entraînant un mécanisme de pompage de type rotatif (52) logé à l'intérieur dudit cylindre (53, 53a, 53b, 53c) par l'intermédiaire dudit arbre d'entraînement (60), et augmente une pression du fluide, le dispositif de pompage (51) comprenant :
un mécanisme d'étanchéité (1, 63) agencé entre ledit mécanisme de pompage (52) et une extrémité ouverte dudit trou d'insertion d'arbre (57), le mécanisme d'étanchéité (1, 63) comprenant :
une bague d'étanchéité (11) qui est agencée de manière étanche aux liquides dans une périphérie intérieure dudit trou d'insertion d'arbre (57) afin de venir de manière coulissante en contact étroit avec une surface périphérique dudit arbre d'entraînement (60) ;
une contre-bague (21) qui est agencée dans une périphérie extérieure de ladite bague d'étanchéité (11) afin d'assurer l'étanchéité entre ladite bague d'étanchéité (11) et ledit cylindre (53, 53a, 53b, 53c) ; et
un élément d'étanchéité (63) qui est agencé de manière étanche aux liquides dans une périphérie intérieure de l'extrémité ouverte dudit trou d'insertion d'arbre (57) afin de venir de manière coulissante en contact étroit avec la surface périphérique dudit arbre d'entraînement (60) et de former une chambre intermédiaire (B) entre ladite bague d'étanchéité (11), ladite contre-bague (21) et ledit élément d'étanchéité (63),
dans lequel ladite contre-bague (21) est construite par une garniture de lèvre (22) qui est pourvue d'une lèvre intérieure (24) et d'une lèvre extérieure (25) dans une partie d'extrémité dans une direction axiale d'une partie de base annulaire (23), et **caractérisé en ce que** ladite contre-bague (21) est pourvue d'une saillie annulaire (26) établissant une marge de compression de direction diamétrale (D) dans ladite contre-bague (21) dans une surface périphérique extérieure de ladite partie de base annulaire (23) et ladite contre-bague (21) ayant une fonction d'étanchéité en étant en contact étroit avec ladite bague d'étanchéité (11),
dans lequel ladite lèvre extérieure (25) a une fonction d'étanchéité en étant en contact étroit avec ledit cylindre (53, 53a, 53b, 53c) pour assurer l'étanchéité vis-à-vis dudit fluide enfermé et est pourvue d'une directionnalité par rapport à l'action d'étanchéité de sorte que ladite lèvre extérieure (25) soit capable de libérer une pression accumulée dans un espace (A) entre ledit mécanisme de pompage (52), ladite bague d'étanchéité (11) et ladite garniture de lèvre (22) en étant poussée par une pression afin d'être espacée dudit cylindre (53, 53a, 53b, 53c) dans un état dans lequel ladite pression accumulée est générée dans ladite chambre intermédiaire (B) et appliquée sur un côté de surface arrière de ladite lèvre extérieure (25),
dans lequel ladite saillie annulaire (26) est pourvue d'un trajet d'écoulement (27) pour introduire ladite pression accumulée sur ladite lèvre extérieure (25).
